(19) Europäisches Patentamt / European Patent Office / Office européen des brevets

(11) **EP 2 984 728 B1**

(12) **FASCICULE DE BREVET EUROPEEN**

(45) Date de publication et mention de la délivrance du brevet:
**25.01.2017 Bulletin 2017/04**

(21) Numéro de dépôt: **14719054.0**

(22) Date de dépôt: **27.03.2014**

(51) Int Cl.:
*H02J 50/12* (2016.01)     *H02J 50/80* (2016.01)
*H02J 7/02* (2016.01)     *H01F 38/14* (2006.01)
*B60L 11/18* (2006.01)     *H02J 5/00* (2016.01)

(86) Numéro de dépôt international:
**PCT/FR2014/050728**

(87) Numéro de publication internationale:
**WO 2014/167207 (16.10.2014 Gazette 2014/42)**

(54) **PROCÉDÉ DE CHARGE PAR INDUCTION D'UNE BATTERIE DE VÉHICULE**

VERFAHREN ZUM LADEN EINER FAHRZEUGBATTERIE DURCH INDUKTION

METHOD FOR CHARGING A VEHICLE BATTERY BY INDUCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2013 FR 1353253**

(43) Date de publication de la demande:
**17.02.2016 Bulletin 2016/07**

(73) Titulaire: **Schneider Electric Industries SAS**
**92500 Rueil-Malmaison (FR)**

(72) Inventeurs:
• **HERRIOT, Yann**
  **38050 Grenoble Cedex 09 (FR)**
• **LADAS, Dimitrios**
  **38050 Grenoble Cedex 09 (FR)**
• **LECONTE, Gauthier**
  **38050 Grenoble Cedex 09 (FR)**

(74) Mandataire: **Tripodi, Paul et al**
**Schneider Electric Industries SAS**
**Service Propriété Industrielle**
**World Trade Center - E1**
**5 Place Robert Schuman**
**38050 Grenoble Cedex 9 (FR)**

(56) Documents cités:
**EP-A1- 2 530 812     WO-A1-2012/024250**
**FR-A1- 2 947 113**

• **COVIC G A ET AL: "Design Considerations for a Contactless Electric Vehicle Battery Charger", IEEE TRANSACTIONS ON INDUSTRIAL ELECTRONICS, IEEE SERVICE CENTER, PISCATAWAY, NJ, USA, vol. 52, no. 5, 1 octobre 2005 (2005-10-01), pages 1308-1314, XP011139887, ISSN: 0278-0046, DOI: 10.1109/TIE.2005.855672**

**Description**

DOMAINE TECHNIQUE DE L'INVENTION

L'invention est relative à un procédé de charge par induction d'une batterie électrique d'un véhicule motorisé, à partir d'un dispositif de charge. Ledit dispositif comprend d'une part un émetteur de charge comprenant une bobine primaire disposée dans une place de stationnement pour véhicule motorisé, un onduleur apte à délivrer à la bobine primaire une tension alternative d'alimentation. Ledit dispositif comprend d'autre part un récepteur de charge comprenant une bobine secondaire agencée dans le véhicule positionné sur la place de stationnement. Ledit procédé consiste à adapter une fréquence de la tension d'alimentation de l'onduleur à une valeur sensiblement égale à la fréquence de résonnance du dispositif de charge lorsqu'un véhicule motorisé se trouve sur la place de stationnement.

ETAT DE LA TECHNIQUE

Les techniques de charge des véhicules électriques sont multiples. Il est connu d'utiliser des câbles ou des fils électriques pour relier le véhicule au chargeur de batterie. D'autres solutions, dites sans contact, comme par exemple les techniques de charge par induction sont aussi décrites.

Les techniques de charge par induction présentent notamment l'intérêt de supprimer les problèmes liés à la corrosion des contacts électriques au niveau des chargeurs et des prises électriques. Ces techniques permettent aussi de simplifier les manipulations électriques des utilisateurs, manipulations qui peuvent parfois présenter des risques objectifs.

Le principe de la recharge par induction est lié ici à l'utilisation d'un transformateur faiblement couplé dit « dans l'air ».

Le transformateur comporte une bobine primaire connectée électriquement au convertisseur de charge situé dans le sol et une bobine secondaire connectée électriquement au récepteur embarqué dans le véhicule.

En pratique, la bobine primaire et la bobine secondaire sont séparées par un grand « entrefer ».

Le convertisseur de charge génère un courant dans le primaire. Ce courant génère un champ magnétique qui pour une part traverse le secondaire. Cela induit alors un courant dans le secondaire, qui va permettre de charger la batterie.

La charge des batteries utilisant un système à base de transformateur faiblement couplé (transformateur dans l'air) requiert des lois de commande robustes permettant :

- d'assurer la sécurité de la batterie durant la charge (ondulation de courant, dépassements...) ;

- d'optimiser le rendement du transfert de puissance ;

- de minimiser le niveau de champ magnétique rayonné.

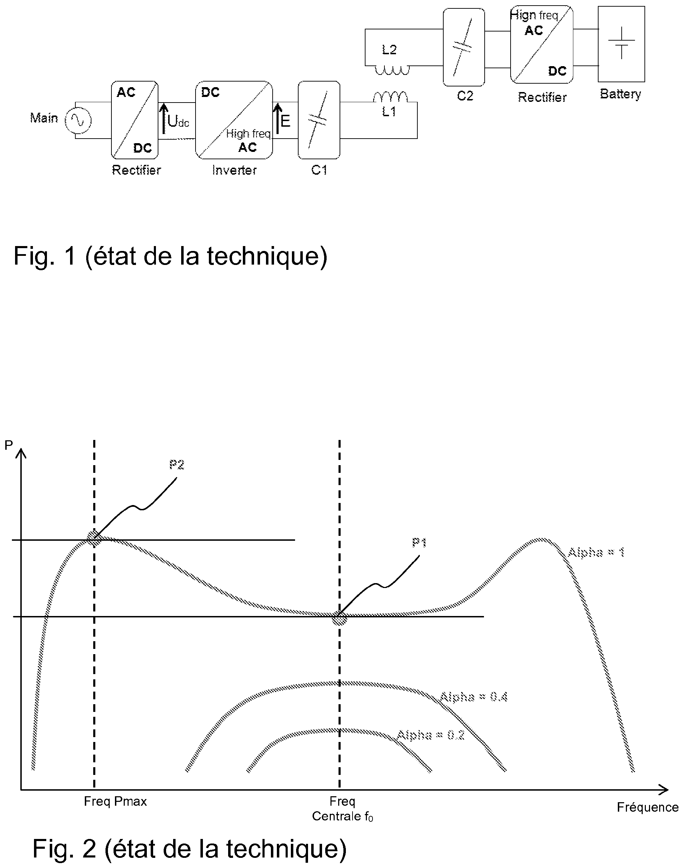

Comme représenté sur la figure 1, le système de charge comprend d'une part un émetteur de charge, comprenant un convertisseur AC/DC (rectifier), un onduleur (inverter) et une bobine primaire L1 disposée dans une place de stationnement pour véhicule motorisé. Le système de charge comprend en outre un récepteur de charge comprenant une bobine secondaire L2 agencée dans le véhicule positionné sur la place de stationnement. La bobine secondaire est généralement reliée à une batterie (battery) du véhicule à travers un autre convertisseur AC/DC (rectifier).

On définit un couplage magnétique $K_{mag}$ comme un rapport entre une valeur de mutuelle inductance M entre la bobine primaire et la bobine secondaire et la racine carrée du produit des inductances desdites bobines L1, L2. Le couplage magnétique s'exprime sur la forme de l'équation (1) suivante :

$$K_{mag} = \frac{M}{\sqrt{L_1 \times L_2}} \qquad \textbf{(Eq1)}$$

Dans le cas d'un transformateur parfaitement couplé, où l'intégralité du flux magnétique est commun aux deux enroulements (primaire et secondaire), le couplage magnétique est égal à 1 (($K_{mag} = 1$).

Dans le cas de la charge de véhicule électrique par induction, l'absence de noyau magnétique engendre des fuites assez importantes. Le couplage magnétique peut varier alors entre 0.1 à 0.6. En l'absence de tout système de positionnement mécanique des bobines, ce couplage magnétique dépend de la position entre les bobines primaire et secondaire L1, L2, autrement dit de la position du véhicule par rapport à la borne de recharge contenant la bobine primaire.

Si le transformateur est alimenté dans l'air en direct par une source de tension variable, celle-ci devra fournir l'énergie réactive stockée dans les inductances. En pratique, cela reviendrait à surdimensionner cette alimentation. Une autre conséquence naturelle serait d'obtenir des rendements très faibles, car les courants trop importants générés iraient dissiper de l'énergie dans les résistances série des bobinages (pertes par effet joule).

Pour minimiser les inconvénients décrits ci-dessus, des condensateurs C1, C2 sont utilisée pour compenser l'énergie réactive des inductances L1, L2. Dans cet exemple d'application, les condensateurs sont placés en série par rapport à la bobine primaire et la bobine secondaire.

La compensation dite en série au primaire est notamment rendue nécessaire par l'utilisation majoritairement répandue des onduleurs de tension. L'utilisation d'onduleurs de courants reviendrait à ajouter une inductance supplémentaire qui alourdirait inutilement l'architecture.

La compensation dite en série au secondaire rend l'architecture symétrique et allège grandement l'architecture électrique dans véhicule. En effet, l'utilisation d'une capacité en parallèle au secondaire nécessiterait l'ajout d'une self conséquente (poids et coût) dans le véhicule.

La charge par induction du véhicule électrique doit faire face au problème de couplage variable entre les circuits primaire et secondaire du transformateur : couplage dépendant du positionnement de la voiture sur son emplacement et dépendant de la taille de la voiture. Un système optimisé fonctionne à la pleine résonance en tension et en courant, c'est-à-dire avec une tension de sortie $U_{ond}$ maximale, $I_{ond}$ égal au courant nominal de l'onduleur, et $I_{ond}$ en phase avec $U_{ond}$.

En effet, dans le schéma proposé sur la figure 1, l'onduleur (inverter) est un onduleur de tension, avec une tension d'entrée Udc fixe et dimensionné pour un courant maximal de sortie ($I_{ond}$ max). Par nature, l'onduleur de tension limite la tension d'entrée Udc maximum que l'on puisse accepter, et ce en fonction de la technologie de semi-conducteur choisie. Ainsi, l'augmentation de la puissance de l'onduleur de tension se fait par l'augmentation du courant admissible, c'est a dire en augmentant le calibre en courant des semi-conducteurs, ou en améliorant leur refroidissement. Au courant maximum donné, on dispose donc bien de la puissance maximale disponible à la pleine résonance.

En admettant que l'on ait optimisé le transformateur pour un couplage donné $K_{mag}$, une variation du couplage va nécessairement changer le point de fonctionnement. On considère que le transformateur est optimisé quand le système fonctionne à la pleine résonance au courant nominal de l'onduleur pour transmettre une puissance de charge correspondant à une consigne. En effet, si la puissance de charge est maintenue à la valeur de consigne et si la tension de sortie E de l'onduleur (variable de contrôle) était déjà maximum alors pour respecter ladite consigne de puissance malgré un couplage non-optimal, le courant de l'onduleur devra augmenter si la tension de sortie $U_{ond}$ diminue.

Aussi, dans le cas usuel, on est obligé de sur-dimensionner en courant l'onduleur pour pouvoir tolérer des phases de courant plus important lorsque le couplage est dégradé.

La solution décrite dans le brevet FR2947113 propose de fixer la fréquence f de la tension de sortie E de l'onduleur à la fréquence de résonance $f_0$ et de réguler la phase entre la tension et le courant au primaire du circuit afin de rester à la résonance. Cette solution tend à garantir le fonctionnement optimal du système (rendement) quelque soit la position du primaire par rapport au secondaire. Cette idée s'appuie sur un fonctionnement de l'onduleur en pleine onde, avec la possibilité de modifier la valeur de la tension d'entrée de l'onduleur Udc pour réguler la puissance transmise. Un fonctionnement de l'onduleur en pleine onde signifie que l'onduleur a un rapport cyclique égal à 1 ($\alpha$=1) pour délivrer une tension de sortie E maximale. La solution décrite considère que le fonctionnement à la résonance $f_0$ est le fonctionnement optimal du système. Ceci a pour conséquence de choisir une architecture de conversion où l'onduleur sera piloté à rapport cyclique fixe ($\alpha$ = 1) et que la régulation de tension de sortie E sera faite au niveau d'un organe DC/DC supplémentaire ajouté entre le réseau et l'onduleur. En outre, cette solution impose le fait que l'on puisse modifier la tension d'entrée $U_{dc}$ de l'onduleur. De plus, l'inconvénient de la solution du brevet FR2947113 est l'utilisation exclusive de la fréquence de résonance $f_0$. En effet, le transformateur selon cette solution ne permet pas de transférer toujours la puissance demandée, en particulier lorsque le couplage magnétique est bon. Comme représenté sur la figure 2, où est représentée puissance transférée en fonction de la fréquence et du rapport cyclique de l'onduleur, il existe une seconde valeur de consigne de puissance P2 qui ne sera jamais atteinte avec un système qui régule la fréquence de la tension d'alimentation E fournie par l'onduleur sur la fréquence centrale de résonance $f_0$. Avec cet exemple de réalisation, toute consigne de puissance supérieure à une première valeur de consigne P1 ne pourra pas être atteinte lorsque la fréquence de la tension d'alimentation de l'onduleur est égale à la fréquence de résonance $f_0$.

La solution décrite dans la demande de brevet WO201224250 propose de fixer la fréquence f de l'onduleur à une fréquence qui est inférieure à la fréquence de résonance $f_0$. Bien que cette solution permette d'étendre la plage de puissance exploitable par l'installation, ladite solution n'optimise pas le rendement électrique ainsi que le niveau de champs magnétique émis.

Bien que certaines solutions connues tendent à améliorer le rendement du transformateur de charge, notamment en optimisant la fréquence de l'onduleur, lesdites solutions ne sont pas optimales en termes de rayonnement électromagnétique.

EP 2 984 728 B1

EXPOSE DE L'INVENTION

L'invention vise donc à remédier aux inconvénients de l'état de la technique, de manière à proposer un procédé de charge par induction efficace d'un point de vue énergétique, respectant les contraintes de pollution électromagnétique et réduisant les contraintes de courant maximal sur l'onduleur de tension.
Le procédé de charge selon l'invention comporte les étapes suivantes :

- fixer un premier paramètre de transmission de puissance (E, f) ;

- démarrer un test itératif consistant à :

  - fixer une valeur d'un second paramètre de transmission de puissance ;

  - faire varier le second paramètre de transmission de puissance sur une seconde plage de réglage autorisée ;

  - mesurer la puissance transmise entre l'émetteur de charge et le récepteur de charge ;

  - déterminer si la puissance est égale ou supérieure à un seuil de fonctionnement pré-établi ;

  - déterminer si la puissance augmente ;

  - terminer le test itératif si la puissance transmise est supérieure au seuil de fonctionnement pré-établi ;

- fixer la tension d'alimentation de la bobine primaire afin d'atteindre la puissance transmise mesurée, les premier et second paramètres de transmission de puissance étant fixés à leur valeur préalablement établie.

De préférence, le procédé de charge consiste à terminer le test itératif si la puissance transmise est inférieure au seuil de fonctionnement pré-établi, et qu'une valeur de dérivée de la puissance transmise par rapport au temps est négative.
De préférence, le premier paramètre de transmission de puissance est variable dans une première plage de réglage autorisée.
Selon un mode particulier de réalisation, le premier paramètre de transmission de puissance est égal à la fréquence de la tension d'alimentation de l'onduleur. Le second paramètre de transmission de puissance est égal à la tension d'alimentation de la bobine primaire, ladite tension d'alimentation variant dans une seconde plage de tension comportant des bornes.
Selon un autre mode particulier de réalisation, le premier paramètre de transmission de puissance est égal à la tension d'alimentation de la bobine primaire. Le second paramètre de transmission de puissance est égal à la fréquence de la tension d'alimentation de l'onduleur.
Selon un mode préférentiel de réalisation, la fréquence de la tension d'alimentation varie dans une plage de fréquence comportant des bornes ayant respectivement des valeurs supérieures à la fréquence de résonnance.
Avantageusement, la fréquence de la tension d'alimentation varie entre la seconde valeur haute et la première valeur basse.
Avantageusement, la fréquence de la tension d'alimentation varie entre la première valeur basse et la seconde valeur haute.
Selon un mode de développement, une étape du procédé de charge consiste à changer l'accord en fréquence de la bobine primaire de l'émetteur de charge et/ou de la bobine secondaire du récepteur de charge.
De préférence, cela consiste à modifier une valeur de capacité connecté en série ou parallèle avec la bobine primaire et/ou une valeur de capacité connecté en série ou en parallèle avec la bobine secondaire.
Avantageusement, cela consiste à commander des moyens interrupteur aptes à connecter un ou plusieurs condensateurs en série avec la bobine primaire et/ou la bobine secondaire.
Avantageusement, cela consiste à commander des moyens interrupteur aptes à connecter une ou plusieurs condensateurs en parallèle avec la bobine primaire et/ou la bobine secondaire.
Selon un mode de développement, une étape du procédé de charge consiste à changer le couplage magnétique entre la bobine primaire et la bobine secondaire, un coefficient de couplage entre les deux bobines variant entre 15 et 45% de la valeur maximale dudit coefficient.

BREVE DESCRIPTION DES FIGURES

D'autres avantages et caractéristiques ressortiront plus clairement de la description qui va suivre d'un mode particulier de réalisation de l'invention, donné à titre d'exemple non limitatif, et représenté aux dessins annexés sur lesquels :

- la figure 1 représente une vue schématique d'une architecture de charge par induction intégrant le réseau et la batterie du véhicule ;

- la figure 2 représente des courbes d'évolution de la puissance transmise en fonction de la fréquence et du rapport cyclique de l'onduleur d'un émetteur de charge d'une architecture selon la figure 1 ;

- les figures 3A à 3C représentent respectivement des courbes d'évolution de la puissance transmise, du courant électrique dans le circuit primaire, du déphasage entre la tension et le courant dans l'onduleur, du déphasage entre les courants primaire et secondaire, en fonction de la fréquence, dans un premier mode de fonctionnement du procédé selon l'invention, lorsque le rapport cyclique est fixe et le couplage magnétique varie ;

- les figures 4A à 4D représentent respectivement des courbes d'évolution de la puissance transmise, du courant électrique dans le circuit primaire, du déphasage entre la tension et le courant dans l'onduleur, du déphasage entre les courants primaire et secondaire, en fonction de la fréquence, dans un second mode de fonctionnement du procédé selon l'invention, lorsqu'un rapport cyclique varie et le couplage magnétique est fixé à une première valeur ;

- les figures 5A à 5C représentent respectivement des courbes d'évolution de la puissance transmise, du courant électrique dans le circuit primaire, du déphasage entre la tension et le courant dans l'onduleur, du déphasage entre les courants primaire et secondaire, en fonction de la fréquence, dans le second mode de fonctionnement du procédé selon l'invention, lorsque le rapport cyclique varie et le couplage magnétique est fixé à une seconde valeur ;

- les figures 6A à 6C représentent respectivement des courbes d'évolution de la puissance transmise, du courant électrique dans le circuit primaire, du déphasage entre la tension et le courant dans l'onduleur, du déphasage entre les courants primaire et secondaire, en fonction de la fréquence, dans un troisième mode de fonctionnement du procédé selon l'invention, lorsque le rapport cyclique et le couplage magnétique varient ;

- les figures 7A à 7C représentent respectivement des courbes d'évolution de la puissance transmise, du courant électrique dans le circuit primaire, du déphasage entre la tension et le courant dans l'onduleur, du déphasage entre les courants primaire et secondaire, en fonction de la fréquence dans une variante de réalisation du troisième mode de fonctionnement du procédé selon l'invention ;

- les figures 8A et 8B représentent des vues schématiques des moyens de réglage des fréquences de résonance du circuit primaire de l'architecture de charge selon un mode de réalisation de l'invention ;

- les figures 9A et 9B représentent des vues schématiques des moyens de réglage des fréquences de résonance du circuit secondaire de l'architecture de charge selon un mode de réalisation de l'invention ;

- la figure 10 représente un organigramme montrant l'enchainement des étapes du procédé de charge selon un mode préférentiel de réalisation de l'invention.

DESCRIPTION DETAILLEE D'UN MODE DE REALISATION

Le procédé de charge d'une batterie électrique d'un véhicule motorisé selon l'invention est destinée à mis en oeuvre par un dispositif de charge. Comme représenté sur la figure 1, le dispositif de charge comprend un émetteur de charge associé à un récepteur de charge.

L'émetteur de charge comprend une bobine primaire L1 disposée dans une place de stationnement pour véhicule motorisé. Ledit émetteur comprend aussi un onduleur apte à délivrer à la bobine primaire L1 une tension alternative d'alimentation E. Une tension d'entrée Udc est appliquée au niveau des bornes d'entrée de l'onduleur.

La valeur de la tension d'alimentation E de la bobine primaire est directement dépendante d'un premier paramètre égal rapport cyclique $\alpha$ de l'onduleur ainsi qu'un second paramètre égal à la tension d'entrée Udc. Selon le mode de réalisation choisi, les premier et second paramètres peuvent être modifiés par l'utilisateur.

La bobine primaire L1 est accordée en fréquence aux moyens de capacités primaires C1 placées en série ou en parallèle de ladite bobine.

Le récepteur de charge comprenant une bobine secondaire L2 agencée dans le véhicule motorisé. Lorsque le véhicule se positionne sur la place de stationnement les bobines primaire et secondaire sont couplées. En l'absence de système mécanique d'asservissement, le couplage magnétique entre la bobine primaire L1 et la bobine secondaire L2 est variable en fonction du positionnement du véhicule dans la place de stationnement. Il dépend aussi du modèle de véhicule motorisé, et de sa garde au sol. Dans le cas de deux bobines (primaire et secondaire) parfaitement couplées, l'intégralité du flux magnétique est commun aux deux bobines L1, L2. Le coefficient de couplage magnétique $K_{mag}$ est alors égal à 1 (Kmag = 1).

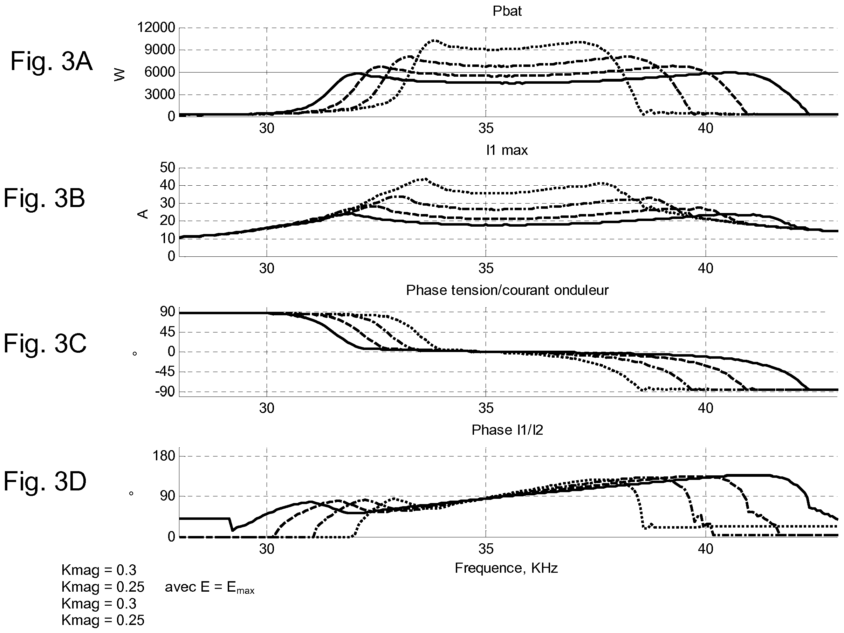

Selon une variante de réalisation non représentée, le dispositif de charge comporte des moyens de réglage aptes à modifier la valeur du coefficient de couplage $K_{mag}$ entre les deux bobines L1, L2. Autrement dit, le couplage magnétique entre la bobine primaire L1 et la bobine secondaire L2 est alors contrôlable. Lesdits moyens sont opérationnels lorsque le véhicule motorisé est positionné sur la place de stationnement. Tel que représenté sur les figures 3A à 3D, à titre d'exemple, le coefficient de couplage $K_{mag}$ entre les deux bobines L1, L2 peut varie entre 15 et 45% de la valeur maximale dudit coefficient.

Ainsi, selon cette variante de développement de l'invention, pour une tension d'alimentation E à la fréquence centrale de résonance $f_0$ la valeur de puissance électrique transmise $P_{bat}$ tend à croitre de façon inversement proportionnelle à la valeur du coefficient de couplage.

La fréquence centrale de résonance $f_0$ se définit par l'équation (2) suivante :

$$f_0 = \frac{1}{2 \pi \sqrt{L1.C1}} \qquad \textbf{(Eq2)}$$

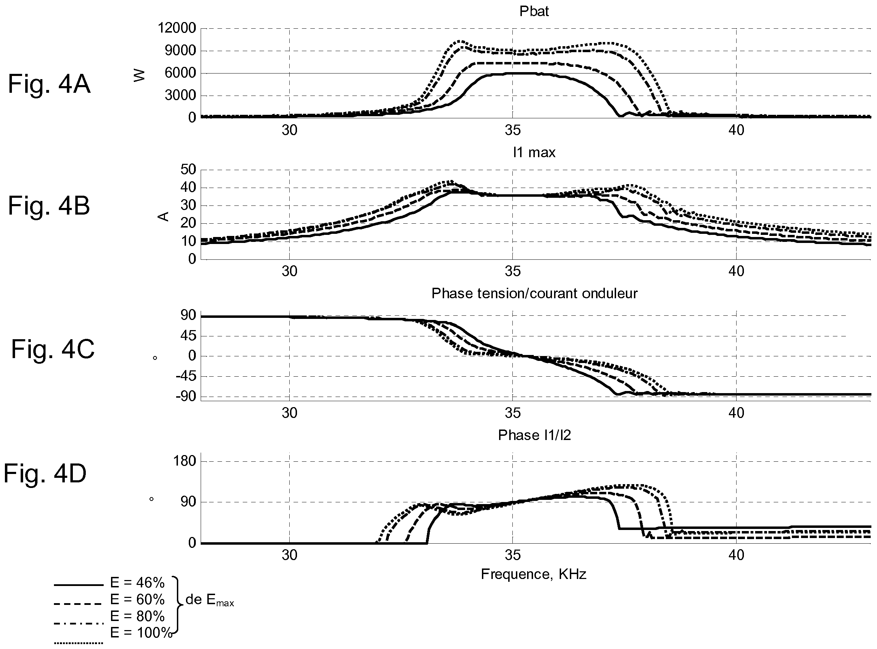

En outre, Il ressort des courbes des figures 4A à 4D, que la puissance électrique seuil $P_{obj}$ fixée à titre d'exemple à 6kW est atteinte à la fréquence de résonance $f_0$ pour une valeur de coefficient de couplage $K_{mag}$ égale à 0,15 et pour une tension d'alimentation de la bobine primaire égale à moins de 50% de la valeur de tension maximale. Selon cette exemple de réalisation, les bobines primaire et secondaire L1, L2 ont été optimisées pour transmettre une puissance de 6 kW à une fréquence égale à f>$f_0$ avec un coefficient de couplage égal à 0,3 (kmag = 0,3).

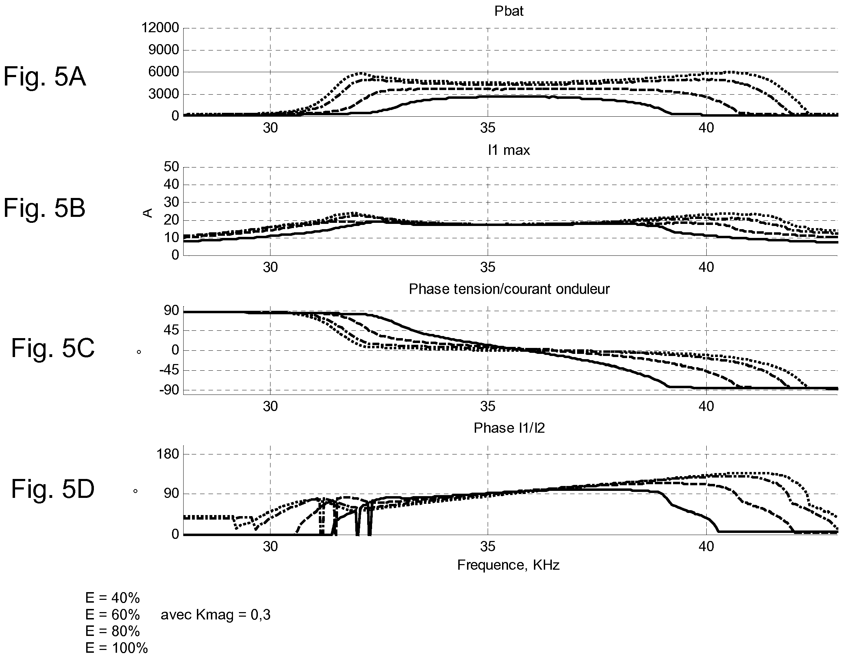

Cette même valeur de puissance électrique seuil $P_{obj}$ de 6kW n'est plus atteinte à la fréquence de résonance $f_0$ pour une valeur de coefficient de couplage $K_{mag}$ égale à 0,3. En effet, comme le montrent les figures 5A à 5D, la puissance électrique seuil $P_{obj}$ n'est pas atteinte pour toutes les valeurs de la tension d'alimentation E variant entre 40 et 100% de la valeur maximale. Dans cet exemple de fonctionnement présenté où le coefficient de couplage $K_{mag}$ est égal 0,3, il est possible d'obtenir la puissance électrique seuil $P_{obj}$ de 6kW à une fréquence haute (f>f0) et avec une tension d'alimentation E maximale. On entend par fréquence haute une fréquence f de tension d'alimentation E supérieure à la fréquence centrale de résonance $f_0$.

En outre, il ressort des courbes de la figure 3B que le courant primaire I1 fournit par l'onduleur croît avec la diminution du couplage $K_{mag}$. Pour cette exemple, la tension d'alimentation E est fixée à sa valeur maximale (E = $E_{max}$).

De plus, les courbes de la figure 4B montrent que le courant primaire I1 fournit par l'onduleur est principalement fonction du couplage magnétique $K_{mag}$, et non de la tension d'alimentation E.

Aussi, selon les exemples de réalisation représentés sur les figures 3, 4 et 5, pour des bobines primaire et secondaire L1, L2 identiques, le courant primaire I1 fournit par l'onduleur peut varier de 26A à 37A crête pour transmettre une puissance électrique seuil $P_{obj}$ de 6kW.

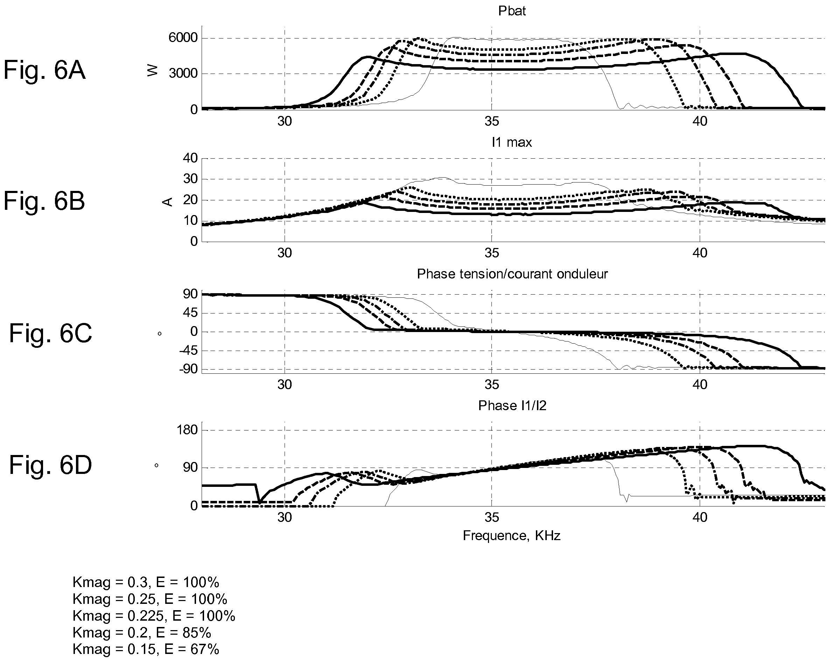

A titre d'exemple de réalisation, le dispositif de charge par induction est optimisé pour transmettre une puissance maximale de 6kW (Pmax = 6kW) lorsque les deux bobines primaire et secondaire ont la même inductance (L1 = L2 = 570µH) et que le coefficient de couplage est égal à 0,225 (Kmag = 0.225). Selon cet exemple de réalisation, les courbes des figures 4B et 6B représentatives du courant électrique I1 dans le circuit primaire montrent que l'on peut réduire le courant primaire fournit par l'onduleur pour un même couplage, en choisissant des valeurs d'inductance L1 et L2 proposant un des points de fonctionnement optimisés pour des couplages magnétiques inférieurs. En effet, pour un couplage égal à 0,15 (Kmag = 0.15) et pour transmettre une puissance de 6kW (P = 6kW), le courant primaire I1 crête peut varier de 28A (figure 6B) à 37A (figure 4B).

Le procédé de charge selon l'invention consiste dans une étape préalable à accorder la fréquence f de la tension d'alimentation E de l'onduleur à une valeur sensiblement égale à la fréquence de résonnance $f_0$ du dispositif de charge lorsque le véhicule motorisé se trouve sur la place de stationnement.

Le but du procédé selon l'invention est d'adapter et/ou d'optimiser la puissance de charge réelle $P_{bat}$ transmise afin d'atteindre ou se rapprocher d'une valeur de puissance électrique seuil $P_{obj}$. La puissance électrique seuil $P_{obj}$ est adaptée au type de batterie électrique présente dans le véhicule motorisé.

Selon un mode général de développement, le procédé de charge comporte les étapes suivantes.

Une première étape consiste à fixer un premier paramètre de transmission de puissance (E, f). On entend par « premier paramètre de transmission de puissance », un paramètre réglable dans le cadre du procédé et qui influence de manière significative la valeur de la puissance transmise $P_{bat}$ de l'onduleur à la batterie du véhicule. Une modification du paramètre de transmission de puissance peut faire croitre ou décroitre la valeur de la puissance transmise $P_{bat}$.

Cette première étape est suivie par le déroulement d'un test itératif. Ledit test consiste dans un premier temps à fixer une valeur d'un second paramètre de transmission de puissance E, f. Comme précédemment, une modification du second paramètre de transmission de puissance influence de manière significative la valeur de la puissance transmise $P_{bat}$ de l'onduleur à la batterie du véhicule.

Le procédé selon l'invention consiste à faire varier le second paramètre de transmission de puissance E, f sur une seconde plage de réglage autorisée. La puissance $P_{bat}$ transmise entre l'émetteur de charge et le récepteur de charge est mesurée et est comparée un seuil de fonctionnement pré-établi. Ledit seuil est égal à la valeur de puissance électrique seuil $P_{obj}$. A titre d'exemple, les mesures de puissance $P_{bat}$ transmises sont réalisées à partir des grandeurs de tensions et de courant disponibles côté primaire, ou à partir de mesures effectuées et transmises par le véhicule motorisé.

Si la puissance $P_{bat}$ transmise est supérieure ou égale à la puissance électrique seuil $P_{obj}$, alors l'ultime étape du procédé selon l'invention consiste à fixer la tension d'alimentation E du circuit primaire L1, C1 afin d'atteindre la puissance $P_{bat}$ transmise mesurée, les premier et second paramètres de transmission de puissance E, f étant fixés à leur valeur préalablement établie.

Si la puissance $P_{bat}$ transmise est inférieure à la puissance électrique seuil $P_{obj}$, alors le procédé tend à évaluer l'évolution de la puissance $P_{bat}$ transmise. Une mesure de la dérivée de la puissance $P_{bat}$ transmise par rapport au temps est réalisée pour connaitre l'évolution de la puissance transmise.

- Si la puissance $P_{bat}$ transmise tend à augmenter ($dP_{bat}/dt>0$) alors le test itératif continue
- Si ladite puissance transmise mesurée tend à diminuer ($dP_{bat}/dt<0$) alors le test itératif se termine.

Selon ce mode général de développement, l'ultime étape du procédé consiste alors à fixer la tension d'alimentation E de la bobine primaire L1 afin d'atteindre la puissance $P_{bat}$ transmise mesurée, les premier et second paramètres de transmission de puissance E, f étant fixés à leur valeur préalablement établie.

Selon un premier mode préférentiel de développement, le premier paramètre de transmission de puissance (E, f) est variable dans une première plage de réglage autorisée. La valeur du premier paramètre de transmission de puissance (E, f) est modifié pour prendre une autre valeur comprise dans la première plage de réglage et le test itératif est alors relancé.

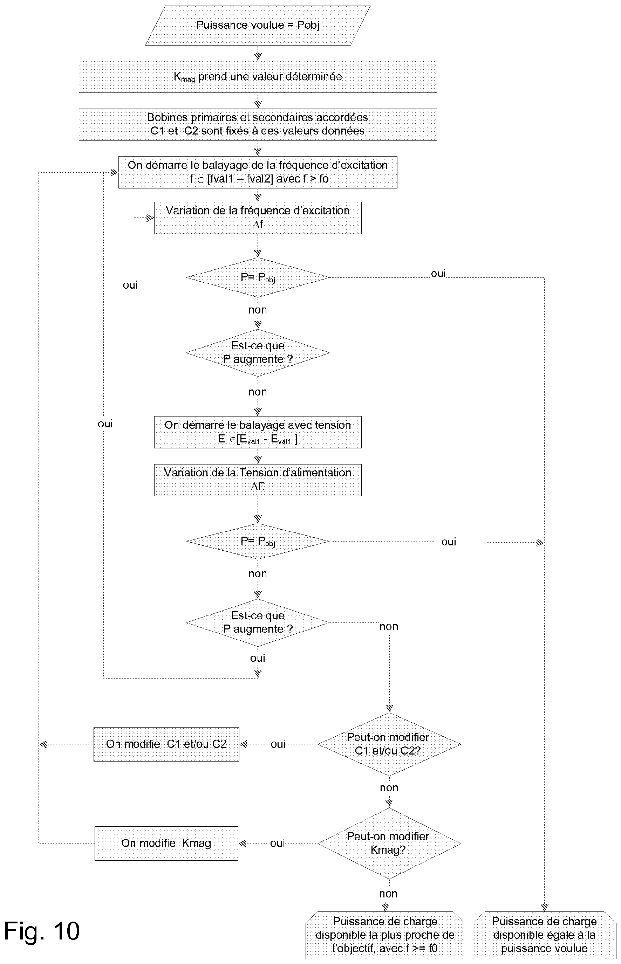

Selon un mode particulier de réalisation tel que représenté sur la figure 10, le premier paramètre de transmission de puissance est égal à la fréquence f de la tension d'alimentation E de l'onduleur. Le second paramètre de transmission de puissance est égal à la tension d'alimentation E de la bobine primaire L1, ladite tension d'alimentation E variant dans une seconde plage de tension comportant des bornes $E_{val1}$, $E_{val2}$.

Selon un autre mode particulier de réalisation non représenté, le premier paramètre de transmission de puissance est égal à la tension d'alimentation E de la bobine primaire L1 et le second paramètre de transmission de puissance est égal à la fréquence f de la tension d'alimentation E de l'onduleur.

Selon ces deux modes de réalisation, et notamment avec le mode de réalisation schématiquement représenté sur la figure 10, la fréquence f de la tension d'alimentation E varie dans une plage de fréquence comportant des bornes $f_{val1}$, $f_{val2}$. Impérativement, ces deux bornes $f_{val1}$, $f_{val2}$ de fréquence ont respectivement des valeurs supérieures à la fréquence de résonance $f_0$. Il est en effet indispensable de faire varier la fréquence f de la tension d'alimentation E de la bobine primaire L1 dans une plage de fréquence dont les bornes ont des valeurs supérieures à la fréquence de résonance $f_0$ du dispositif de charge.

En effet, le fait d'utiliser des fréquences supérieures à la fréquence de résonnance $f_0$, permet de créer un déphasage entre les courants électriques 11, 12 circulant dans les bobines primaire L1 et secondaire L2. Comme cela est représenté sur les figures 3D, 4D, 5D, 6D et 7D, plus la fréquence f de la tension d'alimentation est proche de la valeur maximale haute $f_{val2}$ plus le déphasage entre les courants primaire et secondaire 11, 12 est proche de 180°.

Les pertes de rendement d'un système de charge par induction sont principalement dues aux champs magnétiques induits. Lesdits champs localement élevés sont créés par les courants électriques 11, 12 circulant dans les bobines primaire et secondaire L1, L2. Ces champs magnétiques parasites génèrent notamment des pertes par courants de Foucault, par hystérésis et par effet de proximité.

Bien que difficilement quantifiable, ces pertes de rendement sont directement proportionnelles à la valeur du déphasage entre les courants électriques 11, 12 circulant dans les bobines primaire et secondaire L1, L2. Si les courants sont en phase (déphasage égal à 90°), les champs magnétiques induits générés par ces courants le sont également. Les champs magnétiques induits étant en phase, ceci a pour effet d'augmenter le niveau de champ magnétique global, donc les pertes globales. En revanche, si les courants sont en opposition de phase (déphasage égal à 180°) tels que représentés sur les figures 3D, 4D, 5D, 6D et 7D, les champs magnétiques induits s'opposent, ce qui a pour effet de diminuer le niveau de champ magnétique global et donc les pertes globales. Selon un mode préférentiel de réalisation du procédé, le déphasage entre les courants électrique 11, 12 tend vers son maximum lorsque la fréquence de tension d'alimentation E tend aussi vers son maximum.

En outre, la diminution des pertes induites par le déphasage entre les courants électriques 11, 12 est plus importante que l'augmentation des pertes dans le convertisseur liée à l'augmentation de la fréquence de découpage Ainsi, selon un mode préférentiel de réalisation du dispositif de charge, pour améliorer le rendement global dudit dispositif, il sera préférable d'optimiser le déphasage entre les courants électrique 11, 12 plutôt que de minimiser la fréquence de l'onduleur.

Selon une variante de réalisation du procédé, la fréquence f de la tension d'alimentation E varie entre la seconde valeur haute $f_{val2}$ et la première valeur basse $f_{val1}$. Selon une autre variante de réalisation, la fréquence f de la tension d'alimentation E varie entre la première valeur basse $f_{val1}$ et la seconde valeur haute $f_{val2}$.

En outre, comme précédemment décrit, il ressort des courbes 5A à 5D, que la valeur de puissance électrique seuil $P_{obj}$ (6kW) ne peut pas être atteinte à la fréquence de résonance $f_0$ lorsque le coefficient de couplage $K_{mag}$ est égale à 0,3. Selon le procédé de l'invention, il devient possible d'atteindre la valeur de la puissance électrique seuil $P_{obj}$ (6kW) en augmentant la fréquence f de la tension d'alimentation E. C'est seulement en atteignant la valeur maximale de la fréquence (courbe en pointillés fins) que la puissance de 6 kW peut être transmise à la batterie du véhicule motorisé.

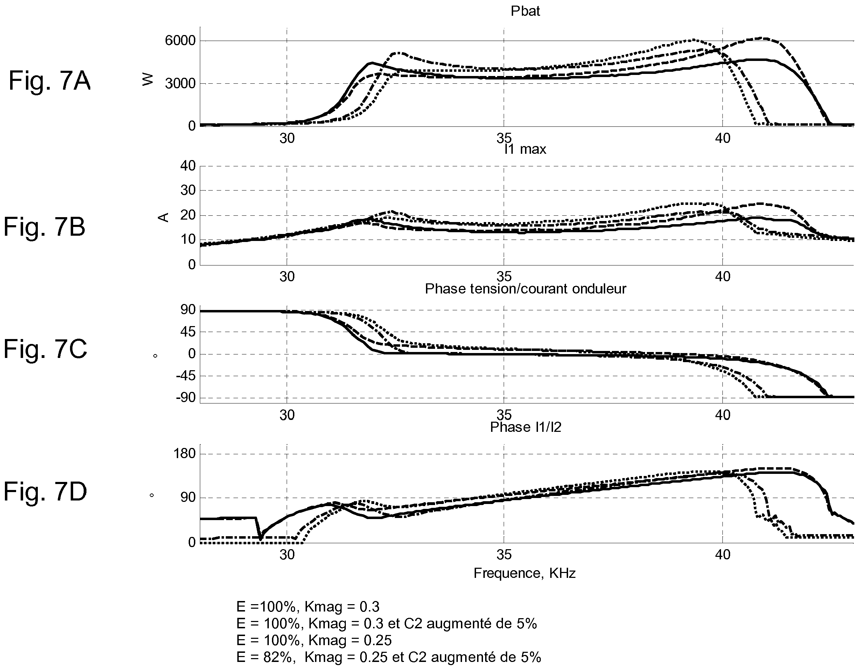

Selon un mode perfectionné de développement de l'invention, lorsque les premier et second paramètres de transmission de puissance E, f ont été modifiés selon les étapes du procédé décrite ci-dessus et que la valeur de la puissance électrique seuil $P_{obj}$ (6kW) n'a pas pu être atteint, une étape supplémentaire du procédé consiste à changer l'accord en fréquence de la bobine secondaire L1 de l'émetteur de charge et/ou de la bobine secondaire L2 du récepteur de charge. De préférence, le procédé selon l'invention consiste à modifier une valeur de capacité C1 connecté en série ou en parallèle avec la bobine primaire L1 et/ou une valeur de capacité C2 connecté en série ou en parallèle avec la bobine secondaire L2. Comme représenté sur les figures 7A à 7D, à titre d'exemple de réalisation, la valeur de capacité C2 connectée en série avec la bobine secondaire L2 est augmentée de 5%. Cette augmentation de la valeur de la capacité C2 crée une dissymétrie dans la courbe représentant la puissance $P_{bat}$ transmise. Ainsi à titre d'exemple, dans l'hypothèse où le coefficient de couplage magnétique est supérieur à 0,225 (Kmag > 0.225) et la valeur de puissance électrique seuil $P_{obj}$ est fixée à 6 kW, la figure 6A montre qu'il n'est pas possible d'atteindre la valeur de la puissance électrique seuil $P_{obj}$ lorsque la bobine secondaire L2 est accordée. Le fait de désaccorder ladite bobine en faisant varier la valeur de la capacité C2, permet alors d'atteindre l'objectif, notamment de délivrer une puissance électrique au moins égale à 6 kW, comme montré sur la figure 7A.

Aussi, la variation de la valeur des capacités peut être un moyen supplémentaire d'optimiser le déphasage entre les courants primaire et secondaire I1 et 12.

Les courbes de la figure 7B et 7C montrent que la solution proposée d'ajustement des capacités de résonance des bobines primaire et/ou secondaire n'implique pas une augmentation du courant fourni par l'onduleur primaire. Ainsi les procédés décrits dans cette invention permettent également de réduire le courant maximal nécessaire à fournir au circuit primaire pour obtenir les puissances de charge voulue. Cette réduction de contrainte en courant réduit le coût de l'onduleur.

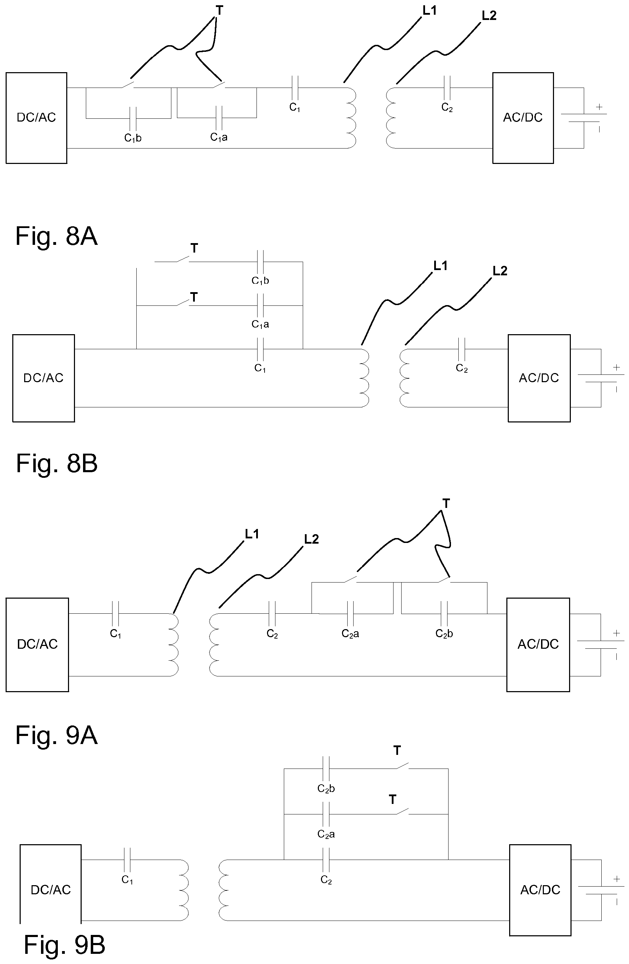

Selon un mode de réalisation du dispositif de charge tel que représenté sur les figures 8A et 9A, des moyens interrupteurs T sont aptes à connecter un ou plusieurs condensateurs C1, C2 en série avec la bobine primaire L1 et/ou la bobine secondaire L2. Le procédé selon un mode de développement de l'invention consiste alors à commander des moyens interrupteurs T aptes à connecter un ou plusieurs condensateurs C1, C2 en série avec la bobine primaire L1 et/ou la bobine secondaire L2.

Selon un autre mode de réalisation du dispositif de charge tel que représenté sur les figures 8B et 9B, des moyens interrupteur T sont aptes à connecter un ou plusieurs condensateurs en parallèle avec la bobine primaire L1 et/ou la bobine secondaire L2. Selon un autre mode de développement de l'invention, le procédé consiste alors à commander des moyens interrupteurs T aptes à connecter une ou plusieurs condensateurs C1, C2 en parallèle avec la bobine primaire L1 et/ou la bobine secondaire L2.

**Revendications**

1. Procédé de charge par induction d'une batterie électrique d'un véhicule motorisé, à partir d'un dispositif de charge comprenant :

    - d'une part un émetteur de charge comprenant une bobine primaire (L1) disposée dans une place de stationnement pour véhicule motorisé, un onduleur apte à délivrer à la bobine primaire (L1) une tension alternative d'alimentation (E) ;
    - d'autre part un récepteur de charge comprenant une bobine secondaire (L2) agencée dans le véhicule positionné sur la place de stationnement ;

ledit procédé consistant à adapter au préalable une fréquence (f) de la tension d'alimentation (E) de l'onduleur à une valeur sensiblement égale à la fréquence de résonnance (fo) du dispositif de charge lorsqu'un véhicule motorisé se trouve sur la place de stationnement ;
ledit procédé étant **caractérisé en ce qu'**il comporte ensuite les étapes suivantes :

- fixer un premier paramètre de transmission de puissance choisi parmi la fréquence (f) de la tension alternative dudit onduleur et l'amplitude de ladite tension alternative;
- démarrer un test itératif consistant à :

- fixer une valeur d'un second paramètre de transmission de puissance, distinct du premier paramètre de transmission de puissance et choisi parmi la fréquence (f) de la tension alternative dudit onduleur et l'amplitude de ladite tension alternative;
- faire varier le second paramètre de transmission de puissance (E, f) sur une plage de réglage autorisée ;
- mesurer la puissance (Pbat) transmise entre l'émetteur de charge et le récepteur de charge ;
- déterminer si la puissance (Pbat) est égale ou supérieure à un seuil de fonctionnement pré-établi (P0bj) ;

- si la puissance (Pbat) transmise est supérieure ou égale au seuil de fonctionnement pré-établi (P0bj) :

- terminer le test itératif
- fixer la tension d'alimentation (E) de la bobine primaire (L1) afin d'atteindre la puissance (Pbat) transmise mesurée, les premier et second paramètres de transmission de puissance (E, f) étant fixés à leur valeur préalablement établie,

- si la puissance (Pbat) transmise est inférieure au seuil de fonctionnement pré-établi (P0bj) :

- déterminer une variation de la puissance (Pbat) transmise par rapport au temps,
- si ladite variation de la puissance transmise par rapport au temps est positive, poursuivre le test itératif.

2. Procédé de charge selon la revendication 1, **caractérisé en ce qu'**il consiste à :

- si ladite variation de la puissance transmise par rapport au temps est négative, terminer le test itératif.

3. Procédé de charge selon les revendications 1 ou 2, **caractérisé en ce que** le premier paramètre de transmission de puissance (E, f) est variable dans une première plage de réglage autorisée.

4. Procédé de charge selon l'une des revendications 1 à 3, **caractérisé en ce que** :

- le premier paramètre de transmission de puissance est égal à la fréquence (f) de la tension d'alimentation (E) de l'onduleur ;
- le second paramètre de transmission de puissance est égal à la tension d'alimentation (E) de la bobine primaire (L1), ladite tension d'alimentation (E) variant dans une seconde plage de tension comportant des bornes (Eval1 , Eval2).

5. Procédé de charge selon les revendications 1 à 3, **caractérisé en ce que** :

- le premier paramètre de transmission de puissance est égal à la tension d'alimentation (E) de la bobine primaire (L1) ;
- le second paramètre de transmission de puissance est égal à la fréquence (f) de la tension d'alimentation (E) de l'onduleur.

6. Procédé de charge selon l'une des revendications 4 ou 5, **caractérisé en ce que** la fréquence (f) de la tension d'alimentation (E) varie dans une plage de fréquence comportant deux bornes ($f_{val1}$ , $f_{val2}$) ayant des valeurs supérieures à la fréquence de résonnance (fo) et désignées respectivement valeur basse et valeur haute.

7. Procédé de charge selon la revendication précédente, **caractérisé en ce que** la fréquence (f) de la tension d'alimentation (E) varie en décroissance entre la valeur haute ($f_{val2}$) et la valeur basse ($f_{val1}$).

**8.** Procédé de charge selon la revendication 6, **caractérisé en ce que** la fréquence (f) de la tension d'alimentation (E) varie en croissance entre la valeur basse ($f_{val1}$) et la aleur haute ($f_{val2}$).

**9.** Procédé de charge selon l'une quelconque des revendications précédentes, **caractérisé en ce qu'**il consiste à changer l'accord en fréquence de la bobine primaire (L1) de l'émetteur de charge et/ou de la bobine secondaire (L2) du récepteur de charge.

**10.** Procédé de charge selon la revendication précédente, **caractérisé en ce qu'**il consiste à modifier une valeur de capacité (C1) connectée en série ou en parallèle avec la bobine primaire (L1) et/ou une valeur de capacité (C2) connectée en série ou en parallèle avec la bobine secondaire (L2).

**11.** Procédé de charge selon la revendication précédente, **caractérisé en ce qu'**il consiste à commander des moyens interrupteur (T) aptes à connecter un ou plusieurs condensateurs (C1 , C2) en série avec la bobine primaire (L1) et/ou avec la bobine secondaire (L2).

**12.** Procédé de charge selon la revendication 10, **caractérisé en ce qu'**il consiste à commander des moyens interrupteur (T) aptes à connecter un ou plusieurs condensateurs (C1 , C2) en parallèle avec la bobine primaire (L1) et/ou avec la bobine secondaire (L2).

**13.** Procédé de charge selon l'une quelconque des revendications précédentes, **caractérisé en ce que** un couplage magnétique entre la bobine primaire (L1) et la bobine secondaire (L2) est contrôlable, un coefficient de couplage (Kmag) entre les deux bobines (L1 , L2) variant entre 15 et 45% de la valeur maximale dudit coefficient.

**Patentansprüche**

**1.** Verfahren zum Laden einer elektrischen Batterie eines Kraftfahrzeugs durch Induktion mittels einer Ladevorrichtung, welche umfasst:

- einerseits einen Ladungssender, der eine Primärspule (L1) umfasst, die an einem Parkplatz für ein Kraftfahrzeug angeordnet ist, wobei ein Wechselrichter dafür ausgelegt ist, der Primärspule (L1) eine Versorgungswechselspannung (E) zuzuführen;
- andererseits einen Ladungsempfänger, der eine Sekundärspule (L2) umfasst, die in dem Fahrzeug angeordnet ist, das auf dem Parkplatz positioniert ist;

wobei das Verfahren darin besteht, im Voraus eine Frequenz (f) der Versorgungsspannung (E) des Wechselrichters an einen Wert anzupassen, der im Wesentlichen gleich der Resonanzfrequenz (fo) der Ladevorrichtung ist, wenn sich ein Kraftfahrzeug auf dem Parkplatz befindet; wobei das Verfahren **dadurch gekennzeichnet ist, dass** es anschließend die folgenden Schritte umfasst:

- Fixieren eines ersten Leistungsübertragungsparameters, der aus der Frequenz (f) der Wechselspannung des Wechselrichters und der Amplitude dieser Wechselspannung ausgewählt ist;
- Starten eines iterativen Tests, der in Folgendem besteht:

- Fixieren eines Wertes eines zweiten Leistungsübertragungsparameters, der von dem ersten Leistungsübertragungsparameter verschieden ist und aus der Frequenz (f) der Wechselspannung des Wechselrichters und der Amplitude dieser Wechselspannung ausgewählt ist;
- Variierenlassen des zweiten Leistungsübertragungsparameters (E, f) auf einem zulässigen Regelbereich;
- Messen der Leistung (Pbat), die zwischen dem Ladungssender und dem Ladungsempfänger übertragen wird;
- Bestimmen, ob die Leistung (Pbat) gleich einem oder größer als ein vorbestimmter Arbeitsschwellenwert (P0bj) ist;

- falls die übertragene Leistung (Pbat) größer als der oder gleich dem vorbestimmten Arbeitsschwellenwert (P0bj) ist:

- Beenden des iterativen Tests,
- Fixieren der Versorgungsspannung (E) der Primärspule (L1), um die gemessene übertragene Leistung (Pbat) zu erreichen, wobei der erste und der zweite Leistungsübertragungsparameter (E, f) auf ihren vorbestimmten Wert fixiert sind,

- falls die übertragene Leistung (Pbat) kleiner als der vorbestimmte Arbeitsschwellenwert (P0bj) ist:

- Bestimmen einer zeitabhängigen Änderung der übertragenen Leistung (Pbat),

- falls die zeitabhängige Änderung der übertragenen Leistung positiv ist, Fortsetzen des iterativen Tests.

2. Verfahren zum Laden nach Anspruch 1, **dadurch gekennzeichnet, dass** es in Folgendem besteht:

- falls die zeitabhängige Änderung der übertragenen Leistung negativ ist, Beenden des iterativen Tests.

3. Verfahren zum Laden nach Anspruch 1 oder 2, **dadurch gekennzeichnet, dass** der erste Leistungsübertragungsparameter (E, f) in einem ersten zulässigen Regelbereich variabel ist.

4. Verfahren zum Laden nach einem der Ansprüche 1 bis 3, **dadurch gekennzeichnet, dass**:

- der erste Leistungsübertragungsparameter gleich der Frequenz (f) der Versorgungsspannung (E) des Wechselrichters ist;
- der zweite Leistungsübertragungsparameter gleich der Versorgungsspannung (E) der Primärspule (L1) ist, wobei die Versorgungsspannung (E) in einem zweiten Spannungsbereich variiert, der Grenzen (Eval1, Eval2) aufweist.

5. Verfahren zum Laden nach einem der Ansprüche 1 bis 3, **dadurch gekennzeichnet, dass**:

- der erste Leistungsübertragungsparameter gleich der Versorgungsspannung (E) der Primärspule (L1) ist;
- der zweite Leistungsübertragungsparameter gleich der Frequenz (f) der Versorgungsspannung (E) des Wechselrichters ist.

6. Verfahren zum Laden nach einem der Ansprüche 4 oder 5, **dadurch gekennzeichnet, dass** die Frequenz (f) der Versorgungsspannung (E) in einem Frequenzbereich variiert, der zwei Grenzen ($f_{val1}$, $f_{val2}$) mit Werten aufweist, die größer als die Resonanzfrequenz (fo) sind und als unterer Wert bzw. oberer Wert bezeichnet werden.

7. Verfahren zum Laden nach dem vorhergehenden Anspruch, **dadurch gekennzeichnet, dass** die Frequenz (f) der Versorgungsspannung (E) zwischen dem oberen Wert ($f_{val2}$) und dem unteren Wert ($f_{val1}$) abnimmt.

8. Verfahren zum Laden nach Anspruch 6, **dadurch gekennzeichnet, dass** sich die Frequenz (f) der Versorgungsspannung (E) zwischen dem unteren Wert ($f_{val1}$) und dem oberen Wert ($f_{val2}$) erhöht.

9. Verfahren zum Laden nach einem der vorhergehenden Ansprüche, **dadurch gekennzeichnet, dass** es darin besteht, die Frequenzabstimmung der Primärspule (L1) des Ladungssenders und/oder der Sekundärspule (L2) des Ladungsempfängers zu ändern.

10. Verfahren zum Laden nach dem vorhergehenden Anspruch, **dadurch gekennzeichnet, dass** es darin besteht, einen Wert einer Kapazität (C1), die mit der Primärspule (L1) in Reihe oder zu ihr parallel geschaltet ist, und/oder einen Wert einer Kapazität (C2), die mit der Sekundärspule (L2) in Reihe oder zu ihr parallel geschaltet ist, zu modifizieren.

11. Verfahren zum Laden nach dem vorhergehenden Anspruch, **dadurch gekennzeichnet, dass** es darin besteht, Unterbrechermittel (T) zu steuern, die geeignet sind, einen oder mehrere Kondensatoren (C1, C2) mit der Primärspule (L1) und/oder mit der Sekundärspule (L2) in Reihe zu schalten.

12. Verfahren zum Laden nach Anspruch 10, **dadurch gekennzeichnet, dass** es darin besteht, Unterbrechermittel (T) zu steuern, die geeignet sind, einen oder mehrere Kondensatoren (C1, C2) zu der Primärspule (L1) und/oder zu der Sekundärspule (L2) parallel zu schalten.

13. Verfahren zum Laden nach einem der vorhergehenden Ansprüche, **dadurch gekennzeichnet, dass** eine magne-

**EP 2 984 728 B1**

tische Kopplung zwischen der Primärspule (L1) und der Sekundärspule (L2) steuerbar ist, wobei ein Kopplungskoeffizient (Kmag) zwischen den zwei Spulen (L1, L2) zwischen 15 und 45 % des Maximalwertes dieses Koeffizienten variiert.

**Claims**

1. Method for charging an electric battery of a motor-driven vehicle by induction, from a charging device comprising:

    - on the one hand, a charge transmitter comprising a primary coil (L1) positioned in a parking space for a motorized vehicle, an inverter suitable for delivering to the primary winding (L1) an alternating power supply voltage (E);
    - on the other hand, a charge receiver comprising a secondary coil (L2) arranged in the vehicle positioned in the parking space;

    said method consisting in matching beforehand a frequency (f) of the power supply voltage (E) of the inverter to a value substantially equal to the resonance frequency (fo) of the charging device when a motorized vehicle is located in the parking space;
    said method being **characterized in that** it then comprises the following steps:

    - setting a first power transmission parameter chosen from the frequency (f) of the alternating voltage of said inverter and the amplitude of said alternating voltage;
    - starting an iterative test consisting in:

        - setting a value of a second power transmission parameter, distinct from the first power transmission parameter and chosen from the frequency (f) of the alternating voltage of said inverter and the amplitude of said alternating voltage;
        - varying the second power transmission parameter (E, f) over an authorized adjustment range;
        - measuring the power (Pbat) transmitted between the charge transmitter and the charge receiver;
        - determining whether the power (Pbat) is equal to or greater than a pre-established operating threshold (P0bj);

    - if the power (Pbat) transmitted is equal to or greater than the pre-established operating threshold (P0bj)

        - ending the iterative test:
        - setting the power supply voltage (E) of the primary coil (L1) in order to reach the measured transmitted power (Pbat), the first and second power transmission parameters (E, f) being set to their previously established value,

    - if the transmitted power (Pbat) is less than the pre-established operating threshold (P0bj)

        - determining a variation of the transmitted power (Pbat) relative to time,

    - if said variation of the transmitted power relative to time is positive, continuing the iterative test.

2. Charging method according to Claim 1, **characterized in that** it consists in:

    - if said variation of the transmitted power relative to time is negative, ending the iterative test.

3. Charging method according to Claims 1 or 2, **characterized in that** the first power transmission parameter (E, f) is variable in a first authorized adjustment range.

4. Charging method according to Claims 1 to 3, **characterized in that**:

    - the first power transmission parameter is equal to the frequency (f) of the power supply voltage (E) of the inverter;
    - the second power transmission parameter is equal to the power supply voltage (E) of the primary coil (L1), said power supply voltage (E) varying in second voltage range comprising limits (Eval1, Eval2).

5. Charging method according to Claims 1 to 3, **characterized in that**:

   - the first power transmission parameter is equal to the power supply voltage (E) of the primary coil (L1);
   - the second power transmission parameter is equal to the frequency (f) of the power supply voltage (E) of the inverter.

6. Charging method according to one of Claims 4 or 5, **characterized in that** the frequency (f) of the power supply voltage (E) varies in a frequency range comprising two limits (fval1 , fval2) having values greater than the resonance frequency (fo) and respectively denoted low value and high value.

7. Charging method according to the preceding claim, **characterized in that** the frequency (f) of the power supply voltage (E) varyingly decreases between the high value ($f_{val2}$) and the low value ($f_{val1}$).

8. Charging method according to Claim 6, **characterized in that** the frequency (f) of the power supply voltage (E) varyingly increases between the low value ($f_{val1}$) and the high value ($f_{val2}$).

9. Charging method according to any one of the preceding claims, **characterized in that** it consists in changing the frequency tuning of the primary coil (L1) of the charge transmitter and/or of the secondary coil (L2) of the charge receiver.

10. Charging method according to the preceding claim, **characterized in that** it consists in modifying a capacitance value (C1) connected in series or in parallel with the primary coil (L1) and/or a capacitance value (C2) connected in series or in parallel with the secondary coil (L2).

11. Charging method according to the preceding claim, **characterized in that** it consists in controlling switch means (T) suitable for connecting one or more capacitors (C1, C2) in series with the primary coil (L1) and/or with the secondary coil (L2).

12. Charging method according to Claim 10, **characterized in that** it consists in controlling switch means (T) suitable for connecting one or more capacitors (C1, C2) in parallel with the primary coil (L1) and/or with the secondary coil (L2).

13. Charging method according to any one of the preceding claims, **characterized in that** a magnetic coupling between the primary coil (L1) and the secondary coil (L2) is controllable, a coupling coefficient (Kmag) between the two coils (L1, L2) varying between 15 and 45% of the maximum value of said coefficient.

EP 2 984 728 B1

Fig. 1 (état de la technique)

Fig. 2 (état de la technique)

14

Fig. 10

Pbat

Fig. 3A

I1 max

Fig. 3B

Phase tension/courant onduleur

Fig. 3C

Phase I1/I2

Fig. 3D

Frequence, KHz

Kmag = 0.3
Kmag = 0.25    avec E = E_max
Kmag = 0.3
Kmag = 0.25

EP 2 984 728 B1

Fig. 4A

Fig. 4B

Fig. 4C

Fig. 4D

Pbat

I1 max

Phase tension/courant onduleur

Phase I1/I2

Frequence, KHz

E = 46%
E = 60%
E = 80%
E = 100%
} de E_max

EP 2 984 728 B1

17

Fig. 5A

Pbat

Fig. 5B

I1 max

Phase tension/courant onduleur

Fig. 5C

Phase I1/I2

Fig. 5D

Frequence, KHz

E = 40%
E = 60%    avec Kmag = 0,3
E = 80%
E = 100%

Fig. 6A

Pbat

Fig. 6B

I1 max

Fig. 6C

Phase tension/courant onduleur

Fig. 6D

Phase I1/I2

Frequence, KHz

Kmag = 0.3, E = 100%
Kmag = 0.25, E = 100%
Kmag = 0.225, E = 100%
Kmag = 0.2, E = 85%
Kmag = 0.15, E = 67%

Fig. 7A

Fig. 7B

Fig. 7C

Fig. 7D

E =100%, Kmag = 0.3
E = 100%, Kmag = 0.3 et C2 augmenté de 5%
E = 100%, Kmag = 0.25
E = 82%, Kmag = 0.25 et C2 augmenté de 5%

EP 2 984 728 B1

Fig. 8A

Fig. 8B

Fig. 9A

Fig. 9B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2947113

- WO 201224250 A